# EUROPEAN PATENT APPLICATION

(11) **EP 1 524 527 A1**
(43) Date of publication of application: **20.04.2005**
(21) Application number: 04254508.7
(22) Date of filing: 28.07.2004
(51) Int. Cl.: G01P 3/00

(54) **Measurement of velocity through space**

(30) Priority: 15.10.2003 GB 0324124
(71) Applicant: Sturt, Alan Charles, Guildford, Surrey GU1 2SX (GB)
(72) Inventor: Sturt, Alan Charles, Guildford, Surrey GU1 2SX (GB)

(57) **Abstract**

Methodology and apparatus for measuring velocity of a device through space comprise generation of particles, measurement of their velocity relative to the device and acceleration of the particles sufficiently to cause the emission of electromagnetic radiation. The wavelength of the radiation emitted is uniquely related to the velocity through space at which it is emitted. Velocity through space is correlated with wavelength of emitted electromagnetic radiation by separate calibration in the laboratory. Velocity of the device through space is calculated by relative velocities. Any apparatus may be used which produces well characterised particles of known velocity. Particles are preferably charged and may be generated from electrodes or from radioactive decay. Most suitable are fundamental particles, electrons, positrons, α-particles and positive and negative ions. Particles are accelerated by electric field. Most suitable devices are vacuum tubes. Any method of measuring wavelength may be used which is appropriate to the wavelength of the emitted radiation.

## Description

The invention relates to apparatus and methodology for measuring the velocity through space of a body having the property of mass from the wavelength of electromagnetic radiation resulting from interaction in space caused by its acceleration.

The velocity of a body is conventionally measured by the change of its distance with time in relation to a given position. Its velocity relative to the given position is the distance travelled in unit time. For example, the velocity might be a number of metres per second relative to the ground.

The apparatus and methodology of this invention measure the velocity of a body having the property of mass relative to space. This velocity is here termed the velocity of the body through space. Space separates all particles of mass.

When the velocity of a mass through space is caused to increase, energy is dissipated in the form of electromagnetic radiation. The wavelength of this electromagnetic radiation is characteristic of the velocity of the mass through space at the instant at which the radiation is emitted. The wavelength of the electromagnetic radiation emitted decreases with increasing velocity through space at which acceleration occurs.

The device of this invention generates or receives particles having the property of mass travelling through space and accelerates them sufficiently to cause the emission of electromagnetic radiation.

It is an object of the present invention to measure the velocity of a device through space by measuring the velocity relative to the device of particles having the property of mass which are caused by the device to accelerate sufficiently to result in the emission of electromagnetic radiation.

It is a further object of the present invention to measure the velocity of a device through space by measuring the wavelength of electromagnetic radiation emitted when particles having the property of mass are caused by the device to accelerate sufficiently to result in the emission of electromagnetic radiation.

In the device of this invention the velocity of the particles relative to the device is established. The velocity of the device through space is the difference between the velocity of the particles through space and the velocity of the particles relative to the device at the instant at which the electromagnetic radiation is emitted.

Suitable particles may be produced by any type of apparatus for producing particles with known velocities relative to the apparatus. Methods of generating the forces required to give the particles velocity may be mechanical, gravitational, electrical, magnetic, electromagnetic or nuclear.

Particularly suitable are vacuum tubes which are sufficiently free of other particles to ensure that collisions play a negligible role. An example is a cathode ray tube in which the motion of electrons is controlled by electric and magnetic fields.

The velocity of particles may be more precisely controlled by known mechanisms of separation by momentum through deflection. The velocity of particles may be built up in stages by successive applications of electric fields.

Knowledge of the strength of electric and magnetic fields allows the velocity of electrons to be calculated.

The particles may originate from an electrode in the apparatus. The electrode may be cold, so that emission is caused only by the applied field. A cathode is preferably heated to reduce the energy required to free electrons. Suitable cathodes are pure metal cathodes of tantalum or preferably tungsten. Oxide coated emitters may be used.

Particles may also originate from the decay of radionuclides which release charged particles. Suitable particles are electrons, positrons, protons and α-particles, the nuclei of helium atoms. Such particles are ejected in random directions. A guide to align charged particles in the direction of the velocity to be measured may suitably be used. Particularly suitable methods for achieving this employ electrical and magnetic fields. It is also possible to narrow the distribution of particle velocities by differential absorption by materials.

The apparatus is preferably evacuated so that there is no other source of radiation which may confuse detection. Forces required to give the particles velocity are preferably supplied by static electric and static magnetic fields. The apparatus is preferably designed to produce stable reproducible velocities such as may be used in mass spectrometers.

Any particle having the property of mass, the velocity of which can be increased to the magnitude required by the particular application, may be used. The particles may be neutral or positively or negatively charged, depending on their suitability for acceleration in the next stage. The particles need to be well characterised and stable at the velocity required for measurement such that no disintegration occurs which would make measurements difficult to interpret. Their velocities should be known, calculable and reproducible. Preferred particles are the electron, the positron, the proton, α-particles and positive and negative ions.

The particles of known velocity are accelerated sufficiently to cause the emission of electromagnetic radiation. The apparatus for producing acceleration may be evacuated or contain a material which does not prevent acceleration of the particles or obscure the specific radiation emitted when they accelerate. For electrons, positrons and protons the preferred condition is a vacuum. For other species of particle preferred materials may include inert gases, especially nitrogen or helium.

The force which is applied to cause the particles to accelerate may be electrical, magnetic or electromagnetic. The force is of sufficient magnitude to accelerate the particles so as to cause the emission of electromagnetic radiation. The most suitable means of applying the force is the electric field. The preferred means of applying the force is the static electric field.

Any apparatus to detect and measure the wavelength of the emitted electromagnetic radiation may be used. Wavelength is defined as the velocity of light divided by its frequency in cycles per second. Either wavelength or frequency may be substituted in calculations in inverse proportion with the constant velocity of light. The methodology uses whichever parameter is most suitably measured for a particular wavelength.

The wavelength of electromagnetic radiation emitted depends on the velocity at which the device is being used. The wavelength may be in any part of the spectrum. This spectrum comprises radio, microwave, infra-red, optical and ultraviolet radiation, and X-rays and γ-rays.

Radio frequencies may be suitably measured by digital counter. Measurement may appropriately involve tuned circuits and the mixing of frequencies to obtain beat frequencies. Microwave frequencies may suitably be measured by Michelson interferometer. Infra-red, optical and ultraviolet wavelengths may be measured by spectrometer or spectrograph. They may preferably be measured by two beam Michelson interferometer and most preferably by Fabry-Perot interferometer through observation of interference fringes to give resolution and precision. Methods of measuring wavelengths of X-ray and γ-ray electromagnetic radiation may include diffraction through materials with known, well defined atomic spacing. Suitable materials are thin metal foils, preferably aluminium, gold or platinum. Wavelengths may be calculated by the Bragg equation.

Most suitable techniques are those with greatest stability and resolution at the velocities produced by acceleration of the particles.

The processes of producing particles of a velocity which is known relative to the apparatus and accelerating them may be consecutive stages combined in the same piece of apparatus.

The wavelengths of emissions caused by acceleration of the particles are correlated with their velocity through space by calibration in the laboratory. The wavelength of the electromagnetic radiation caused by acceleration of particles through space depends only on the species of particle and its velocity at the instant of emission. Calibration determines the relationship between wavelength of emission caused by acceleration of an individual species of particle through space and its velocity through space at the instant at which emission occurs.

The calibration process for the selected species of particle comprises its acceleration sufficient to cause electromagnetic radiation to be emitted starting from known velocities, and detection and analysis of this electromagnetic radiation. Suitable methods of measuring the wavelength of the electromagnetic radiation are described above. Laboratory conditions may allow less robust apparatus to be used in calibration than is needed at high velocity, but which may give greater resolution and precision.

The device of this invention measures the magnitudes of velocities in the units in which the calibration is carried out. These are conventionally the SI intervals of length, the metre, and time, the second. The direction of these velocities is the direction in which the particles are accelerated.

It is an advantage of this device that the process of measuring velocity through space using the device may be very rapid. Measurement of successive velocities and the time-intervals between them allow acceleration through space to be calculated. Acceleration is the change in velocity divided by the time-interval over which it occurred. Rapid processes of measurement may allow instant display or readout of velocity and acceleration through space.

The device of this invention may be used to measure the velocity through space of particles coming into the device from an external source, if they can be accelerated sufficiently to cause electromagnetic emission. The wavelength of this emission can be correlated with particle velocity provided the species of particle can be sufficiently well characterised to calibrate in the laboratory the relationship between its velocity and the wavelength of the emissions caused by its acceleration.

## Claims

1. Methodology, apparatus, and process for determining the velocity of a device through space which comprises acceleration of one or more particles having the property of mass with velocity known relative to the device sufficiently to cause the emission of electromagnetic radiation and comparing the emitted wavelength with that emitted at calibrated velocities.

2. A process of calibration of the velocity of a particle having the property of mass in Claim 1 by giving it a velocity in known units, accelerating it sufficiently from that velocity to cause the emission of electromagnetic radiation and measuring the wavelength of the radiation emitted.

3. Apparatus and process as claimed in Claim 1 where the particles comprise electrons, positrons, protons, α-particles and positive and negative ions or other charged particles.

4. Apparatus and process as claimed in Claim 1 where the charged particle is generated by use of electrodes.

5. Apparatus and process as claimed in Claim 1 where the charged particle originates from the decay of radioactive material.

6. Apparatus and process as claimed in Claim 1 where the particle is accelerated by static electric field.

7. Apparatus and process as claimed in Claim 6 where the apparatus comprises a vacuum tube.

8. Apparatus and process as claimed in Claim 7 where the vacuum tube incorporates detection and analysis of electromagnetic radiation.

9. Methodology, apparatus, and process substantially as herein described.
